# EUROPEAN PATENT APPLICATION

(11) **EP 1 355 221 A2**
(43) Date of publication of application: **22.10.2003**
(21) Application number: 03009053.4
(22) Date of filing: 17.04.2003
(51) Int. Cl.: G06F 1/16

(54) **Computer having detachable wireless independently operable computer**

(30) Priority: 18.04.2002 US 126082
(71) Applicant: Gateway, Inc., North Sioux City, SD 57049-2000 (US)
(72) Inventor: Leapman, Scott D., Sioux City, IA 51104 (US); Reindl, James A., McCook Lake, SD 57049 (US)
(74) Representative: Schlee, Alexander, Dipl.-Ing.

(57) **Abstract**

A mobile computer has a base with a keyboard and one or more storage devices. A touch screen display is removably coupled to the base to form a clamshell like structure. The touch screen display has a processor and memory for receiving and processing input from the touch screen display. The base and touch screen display communicate without wires in either the coupled or uncoupled states. The touch screen display also operates as a tablet PC in one embodiment. Each of the base and touch screen contain transceivers for communicating in a wireless manner. The touch screen display comprises an LCD display and optional keys for use by a user to select or enter data.

## Description

### Field of the Invention

The present invention relates to computers, and in particular to notebook computer having a display that is detachable and operates as a wireless tablet personal computer.

### Background of the Invention

Notebook computers commonly are formed in a clamshell like configuration. The clamshell configuration consists of a base unit and a display. The base unit is usually equipped with a keyboard, processor, memory and diverse storage devices such as disk drives and CD type devices. The display is usually a liquid crystal display (LCD) which is hinged to a back end of the base unit and folds down over the base unit in a clam shell manner when not in use.

Users of portable computers such as notebook computers are demanding smaller and smaller packaging of the computers for more portable use. Some notebook or laptop computers have docking stations having the storage devices in a base station, with a slimmer, lower weight laptop computer operable separate from the base station. This detachable laptop is lighter than the combined laptop and base station. However, loss of the use of the storage devices curtails the overall functionality of the system when detached.

Some computers include detachable mobile computers having separate a separate duplicative display device, usually much smaller than the LCD used with the computer. The detachable mobile computer may communicate with the computer via a wireless connection when detached, but utilizes a hardwired connection when attached. Still other computers have detachable monitors with a pen for input.

### Summary of the Invention

A mobile computer has a base with a keyboard and one or more storage devices. A touch screen display is removably coupled to the base to form a clamshell like structure. The touch screen display has a processor and memory for receiving and processing input from the touch screen display. The base and touch screen display communicate without wires in either the coupled or uncoupled states. The touch screen display also operates as a tablet PC in one embodiment.

In one embodiment, each of the base and touch screen contain transceivers for communicating in a wireless manner. The touch screen display comprises an LCD display and optional keys for use by a user to select or enter data.

The base contains removable disk drives and a touch pad input device in one embodiment. The base and touch screen also have mating hinges with power connections therein.

In one embodiment, a user uses the mobile computer via a keyboard on the base to enter user input. Storage devices in the base provide data to the display via the wireless connection. When the display is detached from the base, it operates as a fully functional tablet PC with touch screen, and wireless connection to the base for transfer of data back and forth.

In still another embodiment, the mobile computer comprises a first processor in a removable display device suitable for independent touch screen input computing. A second processor is provided in a host device with a housing suitable for removably receiving the removable display device. The host device is capable of wireless communication with the removable display device. In one embodiment, the first processor is disabled upon connection of the removable display device to the host device.

### Brief Description of the Drawings

- Figure 1: is a block perspective exploded view of a computer system having a detachable tablet personal computer.
- Figure 2: is a simplified block diagram of functional components of the detachable tablet personal computer of Figure 1.
- Figure 3: is a detailed block architectural diagram of the components of the computer of Figure 1.

### Detailed Description of the Invention

In the following description, reference is made to the accompanying drawings which form a part hereof, and in which is shown by way of illustration specific embodiments in which the invention may be practiced. These embodiments are described in sufficient detail to enable those skilled in the art to practice the invention, and it is to be understood that other embodiments may be utilized and that structural, logical and electrical changes may be made without departing from the scope of the present invention. The following description is, therefore, not to be taken in a limited sense, and the scope of the present invention is defined by the appended claims.

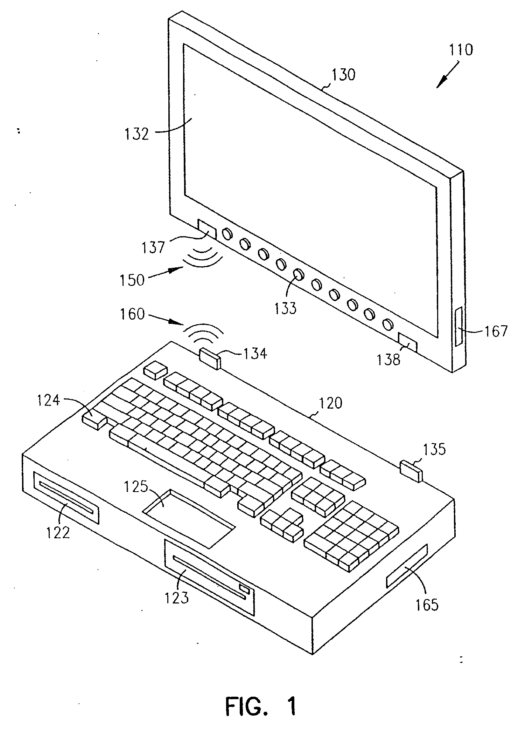

Figure 1 is a block diagram of a laptop computer indicated generally at 110. The computer comprises a base 120 having many devices integrated therein. A diskette drive is indicated at 122, a CD ROM or DVD drive is built into the base at 123. A keyboard 124 is provided on a top surface of base 120, as is a touch pad device. The keyboard is a standard QUERTY keyboard in one embodiment, and comprises a compacted version in some smaller laptop computer implementations.

Laptop computer 110 further comprises a detachable display device 130 having a touch pad screen 132 for data entry and display of images corresponding to computer programs being executed on the laptop computer 110. In one embodiment further keys are provided on the display device 130. In further embodiments, the display device 130 comprises a tablet PC, having a processor for running computer programs such as operating systems and application programs. User interaction with the tablet PC is facilitated by the touch screen 132 and optional keys/buttons 133.

Base 120 comprises hinges 134 and 135 for mating with corresponding hinge portions 137 and 138 on tablet PC 130. In one embodiment, the hinges 134 and 135 provide a structure to mate with hinge portions 137 and 138 which comprise pins parallel to a base of tablet PC 130. The hinge and hinge portions provide a mechanism to allow the combined tablet PC 130 and base 120 to open and shut like a clamshell style laptop or notebook personal computer. They also provide the ability to easily separate the two components of the computer 110.

Each of the base 120 and tablet PC 130 contain transceivers for communication in a wireless manner. In one embodiment, wireless technologies, such as 802.11b, Bluetooth, or other type of wireless communication protocol is used to maintain communication between the base and the tablet PC.

A wireless connection between the base and tablet PC is provided in one embodiment. In a further embodiment, tablet PC 130 and base 120 are capable of being hot plugged or hot swapped. The wireless connection is used in one embodiment as the sole communication mechanism between the components. Thus, there is no need for undocking and docking protocols. The communication between the two components is identical in either embodiment. In some embodiments is the additional devices in the base, such as the storage devices are useable by the tablet PC through the wireless connection. This allows a user to view a video from the DVD 123 through the unattached tablet PC.

Functions may be easily migrated between the two components as desired. In one embodiment, communications to external networks are provided by the tablet PC, and in another embodiment, the external network connection is provided through the base. Printer connections, such as by USB ports are alternatively provided in either or both components.

Power for the components is provided by battery 165 in base 120 and battery 167 in tablet PC 130. In one embodiment, the batteries are sized relatively with respect to power requirements of their respective components and desired weight of each component. Power connections are provided through the hinges in a known manner to provide operating and recharging power through an AC connection. Both components have connectors for receiving power. In one embodiment, the AC power is transformed to a DC power of suitable level prior to provision to the component. This further minimizes required weights of the components.

In still further embodiments, cellular connections may be used to further increase the range of distances of the components. In yet another embodiment, the base contains a processor that operates to control the devices in the base. The processor can operate independently to download content from a network connection whether or not the tablet PC is within range. It can also operate as a coprocessor when the tablet PC is within range. In one embodiment, the base is disconnected from the tablet PC, and provides data from a video recording such as a DVD storage medium via the wireless connection for display on the tablet PC.

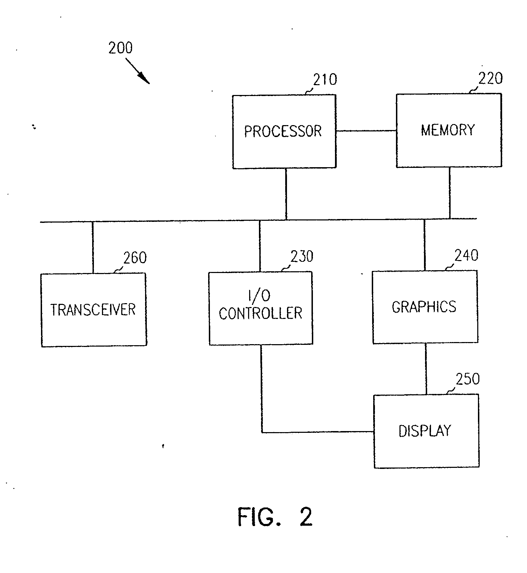

A block diagram of components of a tablet PC 200 constructed in accordance with the present invention is shown in Figure 2. A processor 210 is coupled to a memory 220. Memory 220 contains programming required for the processor to run applications, which are also stored in memory 220 or provided from the base. Memory 220 comprises a non-volatile random access memory, NVRAM, in one embodiment to ensure programming is not lost, and to reduce power requirement. In one embodiment, dynamic random access memory, DRAM, is provided for at least part of memory 220, which may also contain one or more levels of CACHE.

Processor 210 and memory 220 are coupled to a graphics module 240, which provides functions for storing and providing video information in a format to display on a display 250. Display 250 is an LCD display that display digital information corresponding to multiple pixel elements. It also provide touch pad capabilities, either in the display area or in a separate area from the portion of the LCD used for display. Other display technologies providing for input of information as well as display of information may be used as desired.

Information inputted into the display 250 is provided to an I/O controller, as is information from one or more buttons provided on display 250. I/O controller provides the input information to processor 210, or directly to the base 120 via a transceiver 260 for effecting wireless communications with the base. Transceiver 260 also receives information from the base and routes it to processor 210, memory 220 or graphics module 240. In one embodiment, all information is first routed through the processor. In one embodiment, the information is first stored in memory 220. When a video is being provided through transceiver 260, in one embodiment, it is provided directly to the graphics module 240 for display on display 250.

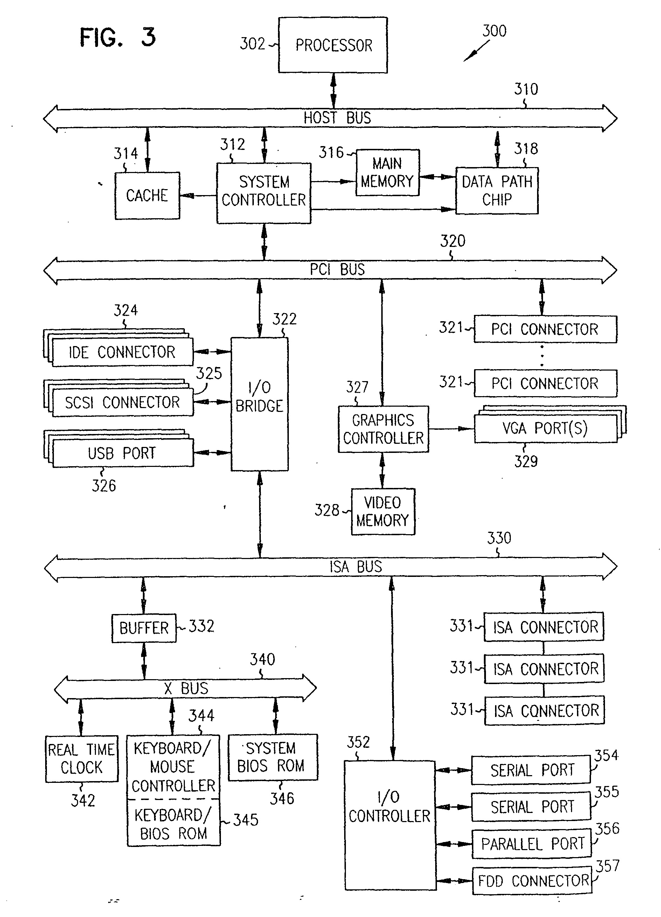

Figure 3 is a block diagram of a computer system 300 that shows components found in the combination of the base and tablet PC. It should be noted that many of the ports, devices and other components shown in Figure 3 can be distributed between, or duplicated in, the tablet PC and base.

Computer system 300 comprises a processor 302, a system controller 312, a cache 314, and a data-path chip 318, each coupled to a host bus 310. Processor 302 is a microprocessor such as a 486-type chip, a Pentium®, Pentium® II, Pentium® III, Pentium® 4, or other suitable microprocessor. Cache 314 provides high-speed local-memory data (in one embodiment, for example, 512 kB of data) for processor 302, and is controlled by system controller 312, which loads cache 314 with data that is expected to be used soon after the data is placed in cache 314 (i.e., in the near future). Main memory 316 is coupled between system controller 312 and data-path chip 318, and in one embodiment, provides random-access memory of between 16 MB and 256 MB or more of data. In one embodiment, main memory 316 is provided on SIMMs (Single In-line Memory Modules), while in another embodiment, main memory 316 is provided on DIMMs (Dual In-line Memory Modules), each of which plugs into suitable sockets provided on a motherboard holding many of the other components shown in Figure 3. Main memory 316 includes standard DRAM (Dynamic Random-Access Memory), EDO (Extended Data Out) DRAM, SDRAM (Synchronous DRAM), or other suitable memory technology. System controller 312 controls PCI (Peripheral Component Interconnect) bus 320, a local bus for system 300 that provides a high-speed data path between processor 302 and various peripheral devices, such as graphics devices, storage drives, network cabling, etc. Data-path chip 318 is also controlled by system controller 312 to assist in routing data between main memory 316, host bus 310, and PCI bus 320.

In one embodiment, PCI bus 320 provides a 32-bit-wide data path that runs at 33 MHz. In another embodiment, PCI bus 320 provides a 64-bit-wide data path that runs at 33 MHz. In yet other embodiments, PCI bus 320 provides 32-bit-wide or 64-bit-wide data paths that run at higher speeds. In one embodiment, PCI bus 320 provides connectivity to I/O bridge 322, graphics controller 327, and one or more PCI connectors 321 (i.e., sockets into which a card edge may be inserted), each of which accepts a standard PCI card. In one embodiment, I/O bridge 322 and graphics controller 327 are each integrated on the motherboard along with system controller 312, in order to avoid a board-connector-board signal-crossing interface and thus provide better speed and reliability. In the embodiment shown, graphics controller 327 is coupled to a video memory 328 (that includes memory such as DRAM, EDO DRAM, SDRAM, or VRAM (Video Random-Access Memory)), and drives VGA (Video Graphics Adaptor) port 329. VGA port 329 can connect to industry-standard monitors such as VGA-type, SVGA (Super VGA)-type, XGA-type (eXtended Graphics Adaptor) or SXGA-type (Super XGA) display devices.

Other input/output (I/O) cards having a PCI interface can be plugged into PCI connectors 321. Network connections providing video input are also represented by PCI connectors 321, and include Ethernet devices and cable modems for coupling to a high speed Ethernet network or cable network which is further coupled to the Internet.

In one embodiment, I/O bridge 322 is a chip that provides connection and control to one or more independent IDE or SCSI connectors 324-325, to a USB (Universal Serial Bus) port 326, and to ISA (Industry Standard Architecture) bus 330. In this embodiment, IDE connector 324 provides connectivity for up to two standard IDE-type devices such as hard disk drives, CDROM (Compact Disk-Read-Only Memory) drives, DVD (Digital Video Disk) drives, videocassette recorders, or TBU (Tape-Backup Unit) devices. In one similar embodiment, two IDE connectors 324 are provided, and each provide the EIDE (Enhanced IDE) architecture. In the embodiment shown, SCSI (Small Computer System Interface) connector 325 provides connectivity for up to seven or fifteen SCSI-type devices (depending on the version of SCSI supported by the embodiment). In one embodiment, I/O bridge 322 provides ISA bus 330 having one or more ISA connectors 331 (in one embodiment, three connectors are provided). In one embodiment, ISA bus 330 is coupled to I/O controller 352, which in turn provides connections to two serial ports 354 and 355, parallel port 356, and FDD (Floppy-Disk Drive) connector 357. At least one serial port is coupled to a modem for connection to a telephone system providing Internet access through an Internet service provider. In one embodiment, ISA bus 330 is connected to buffer 332, which is connected to X bus 340, which provides connections to real-time clock 342, keyboard/mouse controller 344 and keyboard BIOS ROM (Basic Input/Output System Read-Only Memory) 345, and to system BIOS ROM 346.

The integrated system performs several functions identified in the block diagram and flowchart of Figures 1 and 2. Such functions are implemented in software in one embodiment, where the software comprises computer executable instructions stored on computer readable media such as disk drives coupled to connectors 324 or 325, and executed from main memory 316 and cache 314. The term "computer readable medium" is also used to represent carrier waves on which the software is transmitted. The tablet PC also contains PC slots for memory cards, network cards and other cards implementing various well known and future functions.

## Claims

1. A mobile computer comprising:
a base having a keyboard and storage devices; and
a touch screen display removably coupled to the base, the touch screen display having a processor and memory for receiving and processing input from the touch screen display, wherein the base and touch screen display communicate without wires.

2. The mobile computer of claim I wherein each of the base and touch screen comprise transceivers for communicating in a wireless manner.

3. The mobile computer of claim 2 wherein the transceivers communicate utilizing one of Bluetooth and wireless Ethernet.

4. The mobile computer of claim 1 wherein the touch screen display comprises an LCD display.

5. The mobile computer of claim 1 wherein the touch screen display comprises keys for use by a user to select or enter data.

6. The mobile computer of claim I wherein the storage devices in the base comprise removable disk drives.

7. The mobile computer of claim 1 wherein the base comprises a touch pad input device.

8. The mobile computer of claim 1 wherein the base and touch screen comprise mating hinges having power connections therein.

9. A touch screen for a mobile computer, the touch screen comprising:
a processor and memory;
a display area;
a data input portion of the display area;
a wireless transceiver for remotely communicating with a base; and
a hinge for coupling to a mating hinge in the base

10. The touch screen of claim 9 wherein the touch screen comprises a tablet PC.

11. The touch screen of claim 9 wherein the touch screen display area comprises an LCD display.

12. The touch screen of claim 9 and further comprising keys for use by a user to select or enter data.

13. The touch screen of claim 9 wherein the hinge enables the touch screen and base to operate in a clam shell manner.

14. The touch screen of claim 9 wherein the hinge provides a power connection to the base.

15. A method of operating a mobile computer, the method comprising:
using a keyboard on a base to enter user input;
using a storage device on the base to provide data;
transmitting the user input and data to a wireless tablet PC for use and display; and
detaching the tablet PC from the base and using the tablet PC as a stand alone computing device.

16. The method of claim 15 and further comprising receiving data from the base when the tablet PC is detached from the base.

17. The method of claim 15 and further comprising:
reading a movie from the storage device; and
transmitting data to the detached tablet PC for display of the movie.

18. A mobile computer comprising:
a first processor disposed in a removable display device suitable for independent touch screen input computing;
a second processor disposed in a host device with a housing suitable for removably receiving the removable display device, wherein the host device is capable of wireless communication with the removable display device.

19. The mobile computer of claim 18 wherein the first processor is disabled upon connection of the removable display device to the host device.

20. The mobile computer of claim 18 wherein each of the host device and removable display device comprise transceivers for communicating in a wireless manner.

21. The mobile computer of claim 20 wherein the transceivers communicate utilizing one of Bluetooth and wireless Ethernet.

22. The mobile computer of claim 18 wherein the removable display comprises an LCD display with touch screen capabilities.

23. The mobile computer of claim 18 wherein the host device comprises data storage devices.

24. The mobile computer of claim 18 wherein the host device comprises a touch pad input device.

25. The mobile computer of claim 1 wherein the host and removable display comprise mating hinges having power connections therein.
